# EUROPEAN PATENT APPLICATION

(11) **EP 4 734 316 A1**
(43) Date of publication of application: **29.04.2026**
(21) Application number: 25208514.7
(22) Date of filing: 14.10.2025
(51) Int. Cl.: H02J 3/28, C25B 1/04, G21D 9/00, H01M 8/0656, H02J 15/00, G21D 3/00, H01M 8/22

(54) **HYBRID POWER PLANT**

(30) Priority: 25.10.2024 IT 202400023940
(71) Applicant: Ansaldo Nucleare S.p.A., 16152 Genova (IT); Ansaldo Energia Switzerland AG, 5400 Baden (CH)
(72) Inventor: FRIGNANI, Michele, 16152 GENOVA (IT); CARAMELLO, Marco, 16152 GENOVA (IT); CIANI, Andrea, 5400 BADEN (CH); MANTERO, Marco, 16152 GENOVA (IT)
(74) Representative: Studio Torta S.p.A.

(57) **Abstract**

A hybrid power plant includes a nuclear source generator assembly (2), configured to provide a primary electric power (WEP) from a nuclear source; an electrolyzer (3) operable to produce a mixture (M) containing hydrogen from an inlet water flow (FWI) in the vapour and/or liquid phase; a hydrogen storage system (5), coupled to the electrolyzer (3) to receive hydrogen from the mixture (M); and a hydrogen generator assembly (7), operable to produce a secondary electric power (WES) using the hydrogen from the hydrogen storage system (5). A power divider (8), coupled to a distribution grid (15) and to the electrolyzer (3), is configured to controllably divide the primary electric power (WEP) between the distribution grid (15) and the electrolyzer (3) .

## Description

### Cross-reference to related applications

This patent application claims priority from Italian patent application no. 102024000023940 filed on October 25, 2024, the entire disclosure of which is incorporated herein by reference.

### Technical field

The present invention relates to a hybrid power plant.

### Background

As is known, the need to curb pollutant emissions to counteract the adverse effects on the climate, in many cases driven by national regulations, has provided a strong impetus for the exploitation of renewable energies. To date, in some geographical areas, a significant share of energy traditionally produced from fossil fuels has been replaced by energy from wind and photovoltaic sources, which has the advantage of having zero or virtually zero emissions of carbon and nitrogen oxides. However, despite being extremely promising, renewable sources such as wind and photovoltaic sources have the disadvantage of not always being available and, for the most part, their availability is not programmable. Indeed, it is clear that such sources depend on meteorological conditions and, as regards photovoltaic sources, also on the day/night cycle and on seasonality. Under favourable conditions, non-programmable renewable sources may meet demand in accordance with the design specifications, but they are unable to guarantee a constant and, above all, predictable supply.

Non-programmable renewable sources must therefore be supplemented by programmable sources or accumulators, to meet the demands of users, particularly the grid, when conditions are not favourable (for example, weak or no wind for wind sources and cloud cover or night-time conditions for photovoltaic sources). On the other hand, supporting plants based on fossil fuels with plants based on renewable sources would lead to much less significant results in terms of reducing pollutant emissions. Although considerable progress has been made in reducing emissions deriving from the combustion of fossil fuels, current levels cannot be compared to the substantially zero levels of renewable sources such as wind and photovoltaic sources. Furthermore, the performance of plants designed for intermittent use and with variable loads may hardly be optimised with respect to pollutant emissions.

### Summary

It is therefore an object of the present invention to provide a hybrid power plant that overcomes or at least mitigates the limitations described.

According to an aspect of the present invention, there is provided a hybrid power plant comprising:
a nuclear source generator assembly, configured to supply primary electric power from a nuclear source;
an electrolyzer operable to produce a mixture containing hydrogen from an inlet water flow in vapour and/or liquid phase;
a hydrogen storage system, coupled to the electrolyzer to receive hydrogen from the mixture;
a hydrogen generator assembly, operable to produce secondary electric power using the hydrogen from the hydrogen storage system;
a power divider, coupled to a distribution grid and the electrolyzer and configured to controllably divide the primary electric power between the distribution grid and the electrolyzer.

The plant has the advantage of flexibly exploiting a nuclear source, which provides a substantially constant power with response times that may not be compatible with the evolution of the demand, to build up a reserve of hydrogen to be used in case of fluctuations in the load required by the grid, for example, due to the temporary unavailability of non-programmable renewable energy sources. The electric power produced by the nuclear source generator assembly may in fact be divided according to need between the distribution grid and the electrolyzer. When the balance between the demands of the users and the contributions from the energy suppliers, including the supplies from renewable sources, does not require that all the primary electric power be absorbed by the distribution grid, the available margin may be used to increase the hydrogen reserves through the electrolyzer. When the conditions are unfavourable for the production of electric power from non-programmable renewable sources, the plant may exploit the hydrogen generator assembly to provide, in addition to the primary electric power from the nuclear source generator assembly, the secondary electric power using the hydrogen from the hydrogen storage system. The unavailability of the renewable sources may therefore be compensated for with energy likewise produced from a non-polluting source, namely hydrogen, with extremely low or even zero emissions.

Furthermore, the hydrogen generator assembly may be designed to respond rapidly to the demands of the grid and with a response capacity substantially defined by the requirements.

The share of the primary electric power allocated to the electrolyzer may be used for auxiliary plant systems which may serve for the proper functioning of the electrolyzer itself and/or of other parts of the plant.

According to an aspect of the present invention, the nuclear source generator assembly comprises:
a nuclear reactor, configured to supply a flow of a working fluid;
a turbine, configured to extract mechanical energy from the working fluid; and
a primary electric generator, driven by the turbine.

According to an aspect of the present invention, the nuclear reactor comprises at least one reactor of the class of small modular reactors.

Herein, small modular reactors (Small Modular Reactors, SMRs, or Advanced Modular Reactors, AMRs) are understood to be small or medium-sized nuclear reactors, capable of delivering up to a few hundred MW of electric power, cooled by water or by other less conventional fluids (such as liquid metals, molten salts, gases), which may be factory-built using a modular design, in a standardised way, i.e., substantially independent of the specific characteristics of the individual installation site. Once manufactured, the modules of the small modular reactors may be transported to the installation site and put into operation, optionally by combining multiple units to meet the power requirements of the plant.

Modular production makes it possible to drastically reduce design and construction costs, as well as to optimise the performance and safety measures of the plants. The characteristics of small modular reactors and the possibilities of optimising the design lead to safety levels equivalent to or higher than those of large-scale nuclear fission plants.

Small modular reactors are therefore particularly suitable to supplement non-programmable renewable sources and to compensate for temporary shortfalls in production due to unfavourable conditions, without significantly affecting emission levels.

Small modular reactors also have characteristics that allow for an expansion of the availability of compatible sites and proximity to industrial, residential or other energy production centres.

According to an aspect of the present invention, the electrolyzer is a hot electrolyzer, for example comprising a solid oxide electrolyzer cell.

According to an aspect of the present invention, the plant comprises a balance of plant system, coupled to the nuclear source generator assembly and to the electrolyzer; the balance of plant system is configured to heat the inlet water flow for the electrolyzer using a fraction of the working fluid of the nuclear source generator assembly and the mixture provided by the electrolyzer.

The balance of plant system utilises hot streams available in the plant to preheat the inlet water flow for the electrolyzer, bringing it to the desired conditions. In this way, the enthalpy of the mixture, which in the presence of a hot electrolyzer may be very high, is advantageously exploited for greater overall plant efficiency.

According to an aspect of the present invention, the electrolyzer is a cold electrolyzer, for example a protonic exchange membrane electrolyzer or an anionic exchange membrane electrolyzer.

According to an aspect of the present invention, the plant comprises a hydrogen dryer coupled to the electrolyzer to receive the mixture and configured to extract hydrogen from the mixture.

According to an aspect of the present invention, the hydrogen dryer is coupled to the hydrogen storage system and is configured to supply the hydrogen extracted from the mixture to the hydrogen storage system.

The hydrogen dryer serves to separate the hydrogen, the primary product of the electrolyzer, from the vapour contained in the mixture. The hydrogen may thus be collected and stored in the hydrogen storage system through a dedicated line.

According to an aspect of the present invention, the plant comprises a feed line between the balance of plant system and the electrolyzer to feed the inlet water flow to the electrolyzer and a heater along the feed line and operable to heat the inlet water flow.

The heater contributes to bringing the inlet water flow to a temperature optimised for the electrolysis process performed by the electrolyzer.

According to an aspect of the present invention, the hydrogen generator assembly comprises a secondary turbine and a secondary electric generator.

According to an aspect of the present invention, the secondary turbine is a gas turbine and the hydrogen generator assembly comprises, furthermore, a compressor, and a combustor coupled to the hydrogen storage system to receive the hydrogen of the hydrogen storage system, the combustor being preferably operable also with an auxiliary fuel selected from ammonia and hydrocarbon fuel.

The use of a turbine, in particular a gas turbine, as the hydrogen generator assembly makes it possible to exploit the flexible and rapid response of this type of machine when its operation is required. Furthermore, the plant maintains an extremely low level of emissions, because the gas turbine uses exclusively or at least primarily hydrogen as fuel.

According to an aspect of the present invention, the hydrogen generator assembly comprises at least one fuel cell.

The high efficiency of the fuel cells may contribute to improving the overall efficiency of the plant.

According to an aspect of the present invention, the electrolyzer is a reversible electrolyzer and the fuel cell is defined by the electrolyzer reversely operated and fed with the hydrogen from the hydrogen storage system to produce the secondary electric power.

In this case, the hydrogen generator assembly essentially uses components already present in the plant, in particular the electrolyzer, and no additional systems dedicated exclusively to the production of the secondary electric power are required.

According to an aspect of the present invention, the plant according to any one of the preceding claims, comprising a control unit configured to control the power divider as a function of a grid load demand.

According to an aspect of the present invention, the control unit is configured to:
allocate a power equal to the load request to the distribution grid and a difference between the primary electric power and the load request to the electrolyzer, if the load request is lower than the primary electric power; and
allocate the whole primary electric power to the distribution grid and activate the hydrogen generator assembly to supply the secondary electric power to the distribution grid, if the load request is greater than the primary electric power.

The control advantageously exploits the substantially constant power of the nuclear source generator assembly, using the excess over the demand to produce hydrogen to feed the hydrogen generator assembly when necessary.

### Brief description of the drawings

For a better understanding of the present invention some preferred embodiments are presented, by way of non-limiting example, with reference to the accompanying drawings, in which:
- Figure 1 is a simplified block diagram of a hybrid power plant according to an embodiment of the present invention;
- Figure 2 is a simplified block diagram of a hybrid power plant according to a different embodiment of the present invention;
- Figure 3 is a simplified block diagram of a hybrid power plant according to another embodiment of the present invention; and
- Figure 4 is a simplified block diagram of a hybrid power plant according to a further embodiment of the present invention.

### Description of embodiments

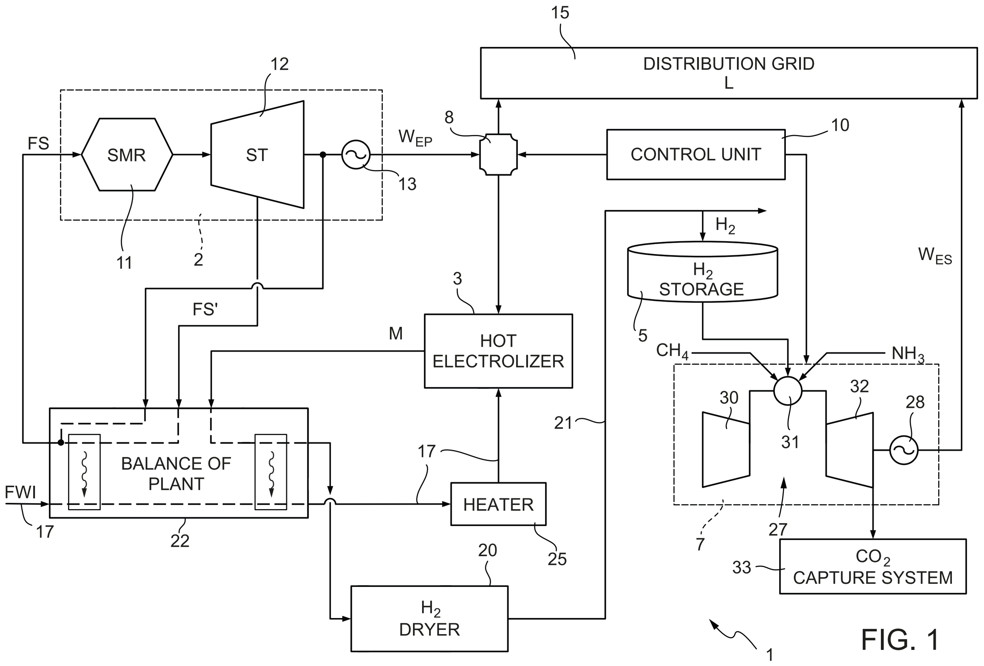

With reference to Figure 1, a hybrid power plant according to an embodiment of the present invention is indicated as a whole by number 1 and comprises a nuclear source generator assembly 2, an electrolyzer 3, a hydrogen storage system 5, a hydrogen generator assembly 7, a power divider 8 and a control unit 10.

The nuclear source generator assembly 2 provides a primary electric power W_{EP} from a nuclear source. In the embodiment of Figure 1, in particular, the nuclear source generator assembly 2 comprises a nuclear reactor 11, a turbine 12 and a primary electric generator 13. It is understood that the turbine 12 may include one or more high, medium or low pressure stages, according to the design preferences. The nuclear reactor 11 may comprise one or more reactors of the class of small modular reactor (Small Modular Reactor, SMR). However, it is understood that the nuclear reactor may be of a different type and include, for example, microreactors, advanced modular reactors (Advanced Modular Reactors, AMR) or a large-scale non-modular nuclear reactor.

Thermal power made available by the nuclear reactor 11 is used to supply a flow of a working fluid FS, from which the turbine 12 extracts mechanical energy to drive the primary electric generator 13 and to deliver the primary electric power W_{EP}. The number of modules forming the nuclear reactor 11 is selected to make available the desired primary electric power W_{EP}. In an embodiment, the working fluid FS is water vapour and the turbine 12 includes one or more steam turbine stages.

The primary electric power W_{EP} provided by the primary electric generator 13 is allocated by the power divider 8 to a distribution grid 15 and to the electrolyzer 3 in proportions determined by the control unit 10 on the basis of a load demand L from the distribution grid 15 itself. For example, if the load demand L is less than the primary electrical power W_{EP}, the power divider 8 allocates to the distribution grid 15 a power equal to the load demand L and to the electrolyzer 3 a difference W_{EP}-L between the primary electric power W_{EP} and the load demand L. It should be noted that the primary electric power W_{EP} actually delivered may be lower than the maximum theoretically available electric power in the event that part of the thermal power is extracted to preheat the mixture entering the electrolyzer by a balance of plant system, as described hereinafter. If, on the other hand, the load demand L is higher than the primary electric power W_{EP}, the power divider 8 allocates the whole primary electric power W_{EP} to the distribution grid 15 and the control unit 10 activates the hydrogen generator assembly 7 to compensate for the excess demand. Under these conditions, the electrolyzer 3 is inactive, as is the dryer 20, while the use of the heater 25 and of the components of the balance of plant system 24 which are intended for heating the water flow FW for the electrolyzer 3 may be limited to temperature maintenance.

The electrolyzer 3, when supplied by the primary electric generator 13 through the power divider 8, performs a water electrolysis process and produces a mixture M containing hydrogen from an inlet water flow FWI received from a water feed line 17. More precisely, the mixture M contains hydrogen and water vapour, as well as any other components. In an embodiment, the electrolyzer 3 is a hot electrolyzer, for example a solid oxide electrolyzer cell (SOEC) .

The hydrogen contained in the mixture M is extracted and stored in the hydrogen storage system 5. The hydrogen storage system 5 is to be understood herein as any structure, substance or material suitable to retain and make available on request the introduced hydrogen. By way of non-limiting example, the hydrogen storage system 5 may be a tank in which the hydrogen is stored under pressure; a storage system in metal hydrides (such as Zirconium) or in carbon or silicon nanotubes; or a storage system based on other chemical forms (ammonia, synthetic fuels). Upstream or downstream of the hydrogen storage system 5, any excess hydrogen may be valorised by feeding it into a distribution grid, not shown herein.

In more detail, the plant 1 is provided with a hydrogen dryer 20 which receives the mixture M from the electrolyzer 3.

The hydrogen dryer 20 condenses the vapour present in the mixture M and provides the extracted hydrogen to the hydrogen storage system 5 through a hydrogen line 21.

In an embodiment, a balance of plant system 22, associated with the nuclear source generator assembly 2, placed along the water feed line 17 heats the inlet water flow FWI of the electrolyzer 3 using a fraction FS' (bleeding or extraction) of the working fluid FS from the turbine 12 and the mixture M exiting from the electrolyzer 3. The extraction may be performed at a convenient point according to the design preferences, irrespective of high, medium or low pressure stages present in the steam turbine 12.

The balance of plant system 22, typical of the power conversion island of the nuclear source generator assembly 2, may comprise several components not illustrated in detail herein, such as heat exchangers, preheaters, evaporators, superheaters and intermediate circuits. The heating of the inlet water flow FWI is particularly advantageous when the electrolyzer 3 is a solid oxide electrolyzer cell, because the high enthalpy of the mixtures entering the balance of plant system 22 may be exploited. The dual advantage is thus obtained of cooling the mixture M leaving the electrolyzer 3, which could otherwise damage the plant components downstream of the electrolyzer 3 itself, and of bringing the inlet water flow FWI to the desired temperature conditions.

In an embodiment, the plant further comprises an electric heater 25, placed along the water feed line 17. The electric heater 25 may further heat the inlet water flow FWI exiting from the balance of plant system 22 to a desired temperature in accordance with the design preferences and as a function of any plant transients, before being fed into the electrolyzer 3. In some embodiments, the electric heater 25 may be activated during transients, for example during plant start-up, in which the enthalpy of the mixture M is not yet sufficient to bring the inlet water flow FWI to the desired conditions through heat exchange in the balance of plant system 22. Once steady-state operating conditions are reached, the electric heater 25 could be switched off.

The hydrogen generator assembly 7 is controlled by the control unit 10 and uses the hydrogen from the hydrogen storage system 5 to produce a secondary electric power W_{ES} which is provided to the distribution grid 15. For example, the hydrogen generator assembly 7 may be operated by the control unit 10 to respond to load demands from the distribution grid 15 that exceed the primary electric power W_{EP} provided by the nuclear source generator assembly 2 or, in general, to support the supply of electric power. The hydrogen generator assembly 7 may be configured to use exclusively hydrogen as fuel, or to use, in addition to hydrogen, also alternative fuels such as ammonia, methane or other hydrocarbon-containing gases. Although the auxiliary fuels other than hydrogen per se affect the emissions, their use is nevertheless limited to use in blending or to particular conditions (for example, the depletion of the hydrogen reserve in the hydrogen storage system 5) and in fact has a marginal impact.

In detail, in an embodiment the hydrogen generator assembly 7 comprises a gas turbine engine 27 and a secondary electric generator 28. In turn, the gas turbine engine 27 includes a compressor 30, a combustor 31 and a secondary turbine 32.

The combustor 31 is coupled to the hydrogen storage system 5 to receive the hydrogen contained therein. The combustor 31 is configured to use as fuel either hydrogen alone, or mixtures of hydrogen and hydrocarbons, in particular methane, or hydrocarbons alone, or ammonia, pure or in a mixture. The selection of the fuel may be managed by the control unit 10 as a function of the operating conditions.

To further reduce emissions when using a hydrocarbon-containing auxiliary fuel, the hydrogen generator assembly 7 may comprise a carbon dioxide capture system 33.

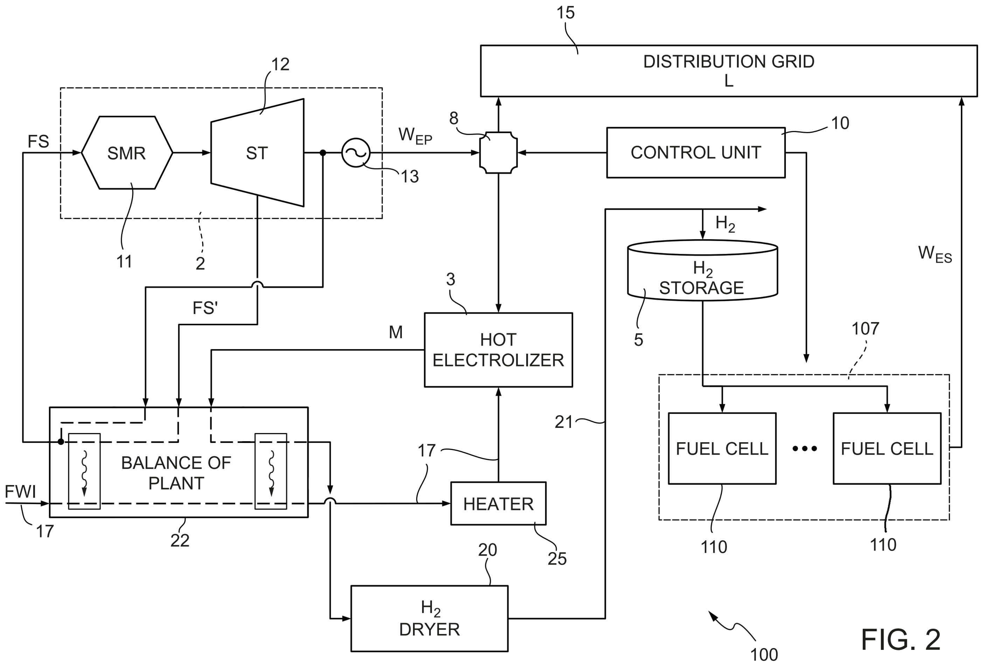

In a different embodiment of the invention, illustrated in Figure 2, a hybrid plant for the production of electric power 100 comprises the nuclear source generator assembly 2, the electrolyzer 3, the hydrogen storage system 5, the power divider 8 and the control unit 10 substantially as already described with reference to Figure 1, as well as the hydrogen dryer 20, the balance of plant system 22 and the electric heater 25.

The plant 100 further comprises a hydrogen generator assembly 107, which includes one or more fuel cells 110. Each fuel cell 110 is fed with hydrogen from the hydrogen storage system 5 and is activatable by the control unit 10 as a function of the load demand of the distribution grid 15 to provide the secondary electric power W_{ES} according to the design preferences.

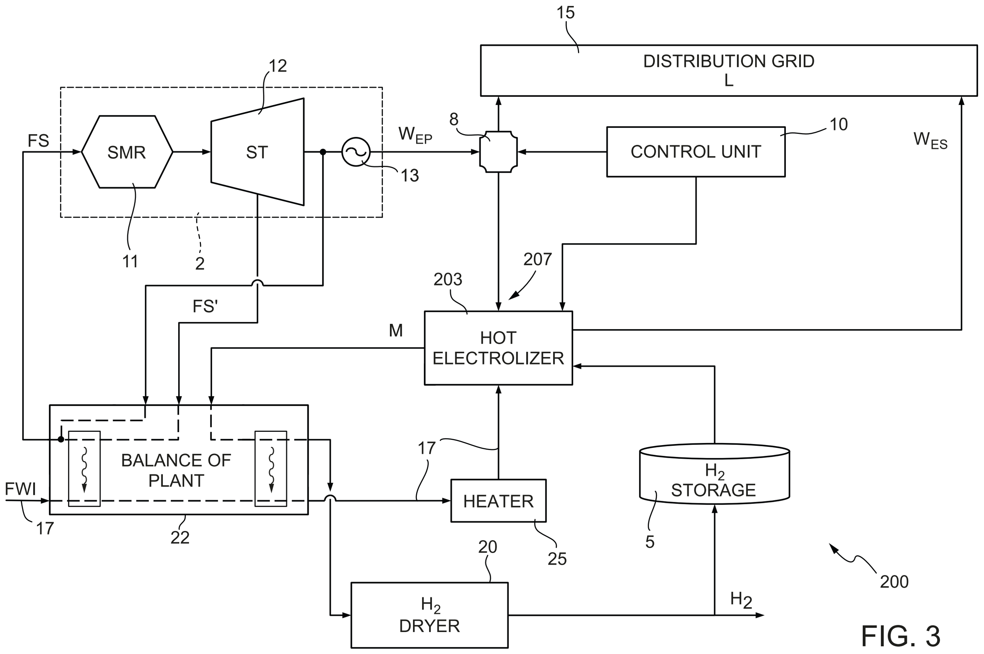

According to the embodiment illustrated in Figure 3, a hybrid plant for the production of electric power 200 comprises the nuclear source generator assembly 2, an electrolyzer 203, the hydrogen storage system 5, the power divider 8 and the control unit 10. The electrolyzer, indicated herein by 203, is a reversible hot electrolyzer and may be reversely operated as a fuel cell and fed with the hydrogen from the hydrogen storage system 5 to produce the secondary electric power W_{ES}. In this operating mode, in practice, the electrolyzer 203 acts as the hydrogen generator assembly 207. For example, a hot electrolyzer, in particular a solid oxide electrolyzer, may be advantageously used also reversely as a fuel cell. The control unit 10 determines the operating mode of the electrolyzer 203 as a function of the load demand L of the distribution grid 15 and of the availability of hydrogen in the hydrogen storage system 5.

It is however understood that further fuel cells, not shown herein, may be used together with the electrolyzer 203 reversely operated to increase the maximum value of the secondary electric power W_{ES} according to the design preferences.

The embodiments of the invention hereinbefore described are based on the use of hot electrolyzers, in particular SOECs, which are particularly advantageous. It is however understood that cold electrolyzers, such as protonic exchange membrane (PEM) electrolyzers or anionic exchange membrane (AEM) electrolyzers, could also be used, simplifying the coupling architecture with the nuclear source generator assembly.

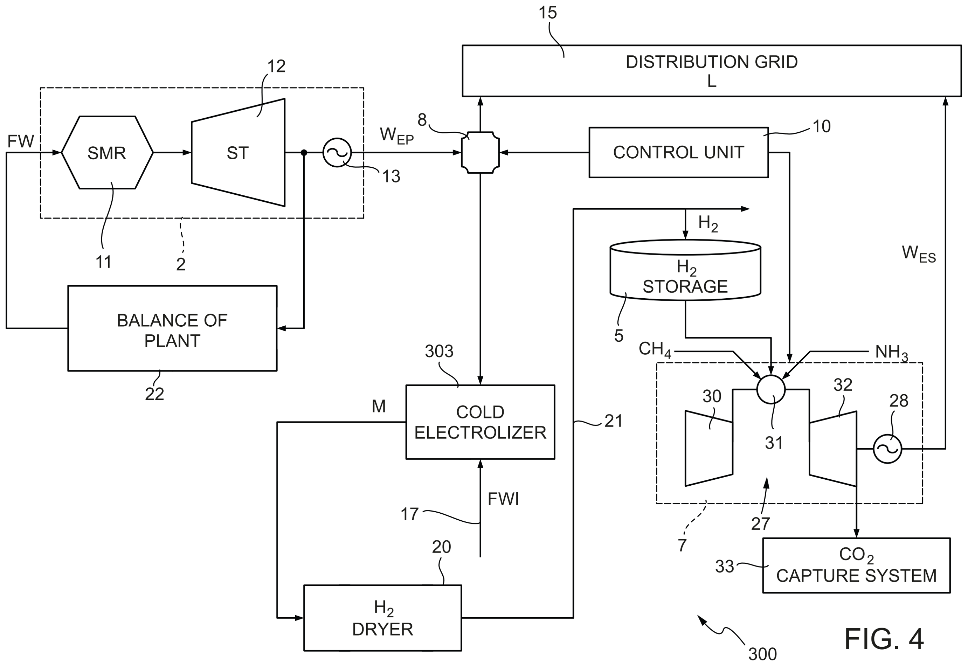

In the embodiment of Figure 4, for example, a hybrid plant for the production of electric power 300 comprises the nuclear source generator assembly 2, a cold electrolyzer 303, the hydrogen storage system 5, the hydrogen generator assembly 7, the power divider 8 and the control unit 10 substantially as already described with reference to Figure 1, as well as the hydrogen dryer 20 and the electric heater 25. In this case, the mixture M provided by the electrolyzer 303 does not require cooling before being provided to the dryer 20 and to the storage system 5 and to the hydrogen generator assembly 7. The plant may therefore be simplified and it is not necessary to couple the outlet of the electrolyzer 303 to the balance of plant system 22, which may be optimised for the nuclear source generator assembly 2 alone.

In the embodiment of Figure 4, the plant utilises the hydrogen generator assembly 7, which comprises the gas turbine 27 and the carbon dioxide capture system 33 and may also be fed with ammonia, hydrocarbons (for example methane) or mixtures thereof. It is however understood that the hydrogen generator assembly could be based on fuel cells, as in the embodiment of Figure 2, and optionally on the electrolyzer 303 reversely operated as a fuel cell.

Finally, it is clear that to the plant herein described and illustrated modifications and variations may be made without departing from the protective scope of the present invention, as defined in the appended claims.

In particular, it is understood that the plant may comprise a plurality of hydrogen generator assemblys, identical to one another or different both in size and in type. For example, a plant according to an embodiment of the invention may comprise a hydrogen generator assembly based on a gas turbine and one or more hydrogen generator assemblys based on fuel cells, one of which may be the electrolyzer.

The type and number of the plant auxiliaries (heat exchangers, heaters) may also be selected to optimise the functioning of the plant.

## Claims

1. A hybrid power plant comprising:
a nuclear source generator assembly (2), configured to supply a primary electric power (W_{EP}) from a nuclear source;
an electrolyzer (3; 203; 303) operable to produce a mixture (M) containing hydrogen from an inlet water flow (FWI) in vapour and/or liquid phase;
a hydrogen storage system (5), coupled to the electrolyzer (3; 203; 303) to receive hydrogen from the mixture (M);
a hydrogen generator assembly (7; 107), operable to provide a secondary electric power (W_{ES}) using the hydrogen from the hydrogen storage system (5);
a power divider (8), coupled to a distribution grid (15) and to the electrolyzer (3; 203; 303) and configured to controllably divide the primary electric power (W_{EP}) between the distribution grid (15) and the electrolyzer (3; 203; 303).

2. The plant according to claim 1, wherein the nuclear source generator assembly (2) comprises:
a nuclear reactor (11), configured to supply a flow of a working fluid (FS);
a primary turbine (12), configured to extract mechanical energy from the working fluid (FS); and
a primary electric generator (13), driven by the primary turbine (12).

3. The plant according to claim 2, wherein the nuclear reactor (11) comprises at least one reactor of the class of small modular reactors.

4. The plant according to claim 2 or 3, wherein the electrolyzer (3; 203) is a hot electrolyzer, for example comprising a solid oxide electrolyzer cell.

5. The plant according to claim 4, comprising a balance of plant system (22) coupled to the nuclear source generator assembly (2) and to the electrolyzer (3; 203); wherein the balance of plant system (22) is configured to heat the inlet water flow (FWI) for the electrolyzer (3; 203) using a fraction (FS') of the working fluid (FS) of the nuclear source generator assembly (2) and the mixture (M) provided by the electrolyzer (3; 203).

6. The plant according to any one of claims 1 to 3, wherein the electrolyzer (303) is a cold electrolyzer, for example a protonic exchange membrane electrolyzer or an anionic exchange membrane electrolyzer.

7. The plant according to any one of the preceding claims, comprising a hydrogen dryer (20) coupled to the electrolyzer (3; 203; 303) to receive the mixture (M) and configured to extract hydrogen from the mixture (M).

8. The plant according to claim 7, wherein the hydrogen dryer (20) is coupled to the hydrogen storage system (5) and is configured to supply the hydrogen extracted from the mixture (M) to the hydrogen storage system (5).

9. The plant according to claim 7 or 8, comprising a feed line (17) between the balance of plant system (22) and the electrolyzer (3; 203) to feed the inlet water flow (FWI) to the electrolyzer (3; 203; 303) and a heater (25) arranged along the feed line (17) and operable to heat the inlet water flow (FWI).

10. The plant according to any one of the preceding claims, wherein the hydrogen generator assembly (7) comprises a secondary turbine (32) and a secondary electric generator (28).

11. The plant according to claim 10, wherein the secondary turbine (32) is a gas turbine and the hydrogen generator assembly (7) comprises, furthermore, a compressor (30) and a combustor (31) coupled to the hydrogen storage system (5) to receive the hydrogen of the hydrogen storage system (5), the combustor (31) being preferably operable also with an auxiliary fuel selected from ammonia and hydrocarbon fuels.

12. The plant according to any one of the preceding claims, wherein the hydrogen generator assembly (107; 207) comprises at least one fuel cell (110).

13. The plant according to claim 12, wherein the electrolyzer (203) is a reversible electrolyzer and the fuel cell (207) is defined by the electrolyzer (203) reversely operated and fed with the hydrogen of the hydrogen storage system (5) to produce the secondary electric power (W_{ES}).

14. The plant according to any one of the preceding claims, comprising a control unit (10) configured to control the power divider (8) as a function of a load demand (L) of the distribution grid (15).

15. The plant according to claim 14, wherein the control unit (10) is configured to:
allocate a power equal to the load demand (L) to the distribution grid (15) and a difference between the primary electric power (W_{EP}) and the load demand (L) to the electrolyzer (3; 203), if the load demand (L) is lower than the primary electric power (V_{EP}); and
allocate the whole primary electric power (V_{EP}) to the distribution grid (15) and activate the hydrogen generator assembly (7; 107) to supply the secondary electric power (V_{LS}) to the distribution grid (15), if the load demand (L) is higher than the primary electric power (W_{EP}).
